# EUROPEAN PATENT APPLICATION

(11) **EP 3 089 415 A1**
(43) Date of publication of application: **02.11.2016**
(21) Application number: 14879387.0
(22) Date of filing: 26.01.2014
(51) Int. Cl.: H04L 27/26

(54) **DATA TRANSMISSION METHOD, APPARATUS AND SYSTEM**

(71) Applicant: Huawei Technologies Co., Ltd., Longgang District Shenzhen, Guangdong 518129 (CN)
(72) Inventor: FAN, Shuju, Shenzhen Guangdong 518129 (CN); WANG, Zongjie, Shenzhen Guangdong 518129 (CN); HUANG, Wenwen, Shenzhen Guangdong 518129 (CN)
(74) Representative: Goddar, Heinz J.
(86) International application number: PCT/CN2014/071504
(87) International publication number: WO 2015/109576

(57) **Abstract**

The present invention provides a data transmission method, apparatus, and system. The method includes: performing coding and modulation on data; mapping the modulated data onto M carriers, where M is an integer greater than 1, a carrier spacing of the M carriers is greater than or equal to a data rate, and the carrier spacing is a spacing between center frequencies of two carriers; performing spectrum spreading, scrambling, and precoding processing on data mapped onto each carrier; performing multi-carrier modulation on the spreaded, scrambled, and precoding processed data; and sending the multi-carrier modulated data to a receiving apparatus. According to the data transmission method, apparatus, and system provided by the present invention, a carrier frequency offset sensitivity problem may be resolved, thereby improving reliability of a communications system.

## Description

### TECHNICAL FIELD

The present invention relates to the communications technologies, and in particular, to a data transmission method, apparatus, and system.

### BACKGROUND

A multiple access technology needs to be used to enable multiple users to simultaneously access a wireless communications system. Common multiple access technologies mainly include: Code Division Multiple Access (Code Division Multiple Access, CDMA for short), Frequency Division Multiple Access (Frequency Division Multiple Access, FDMA for short), Time Division Multiple Access (Time Division Multiple Access, TDMA for short), and the like, and a Wideband Code Division Multiple Access (Wide Code Division Multiple Access, WCDMA for short) technology based on CDMA and an Orthogonal Frequency Division Multiple Access (Orthogonal Frequency Division Multiple Access, OFDMA for short) technology based on FDMA are respectively used by the third-generation communications network and the fourth-generation communications network.

However, an OFDM technology is very sensitive to phase and carrier frequency offset, and is very strict with orthogonality between subcarriers, and any small carrier frequency offset may damage orthogonality between carriers, which results in inter-carrier interference and causes performance to get worse. As a result, reliability of the communications system becomes relatively poor.

### SUMMARY

Embodiments of the present invention provide a data transmission method, apparatus, and system, to resolve a carrier frequency offset sensitivity problem, thereby improving reliability of a communications system.

With reference to a first aspect, an embodiment of the present invention provides a data transmission method, including:
performing coding and modulation on data;
mapping the modulated data onto at least one carrier of M carriers, where M is an integer greater than 1, a carrier spacing of the M carriers is greater than or equal to a data rate, and the carrier spacing is a spacing between center frequencies of two carriers;
performing spectrum spreading, scrambling, and precoding processing on data mapped onto each carrier;
performing multi-carrier modulation on the spreaded, scrambled, and precoding processed data; and
sending the multi-carrier modulated data to a receiving apparatus.

In a first possible implementation manner of the first aspect, the mapping the modulated data onto at least one carrier of M carriers includes:
segmenting a system bandwidth into M contiguous carrier bandwidths; and
allocating the data to the at least one carrier of the M carriers.

With reference to the first possible implementation manner of the first aspect, in a second possible implementation manner, the allocating the data to the at least one carrier of the M carriers includes:
allocating the data to at least two contiguous carriers of the M carrier bandwidths; or
allocating the data to at least two non-contiguous carriers, where when a quantity of the non-contiguous carriers is greater than two, a spacing of the carriers is equal.

In a third possible implementation manner of the first aspect, the performing multi-carrier modulation on the spreaded, scrambled, and precoding processed data includes:
transforming signals on the M carriers into time-domain signals by means of M-point inverse discrete Fourier transform IDFT, where M is an integer greater than 2;
performing cyclic delay spreading on the IDFT transformed time-domain signals; and
performing filtering, K-point partitioning and addition, and parallel-to-serial conversion on the cyclic delay spreaded signals and outputting the signals.

With reference to the third possible implementation manner of the first aspect, in a fourth possible implementation manner, the cyclic delay spreaded signals are aᵢ (n-u)=x_{mod(nK+i, M)} (n-u), where i is an integer greater than 0, and represents a mark number of the cyclic delay spreaded signals on the M carriers, x_{mod(nK+i,M)} is a signal on the mod(nK+i, M)^{th} carrier, mod(nK+i, M) represents nK+i modulo M, K is an over-sampling factor, n represents a latest time point of a signal processed in this cyclic delay spreading, n is an integer greater than 0, u is an integer, 0≤u≤L_{f}/K-1, L_{f}/K groups of signals are processed in each cyclic delay spreading, and each group of signals includes M pieces of data.

With reference to the fourth possible implementation manner of the first aspect, in a fifth possible implementation manner,
a carrier quantity M meets the following condition: M=2^{p}, where p is an integer greater than 1; and a ratio of a carrier bandwidth B of the signal to a carrier chip-level rate R, the over-sampling factor K, and the carrier quantity M meet: K/M=mx(B/R), where m is an integer greater than 0.

With reference to the fourth possible implementation manner of the first aspect, in a sixth possible implementation manner, a transmission rate of the multi-carrier modulated data is a data transmission rate, and the data transmission rate meets the following condition: data transmission rate=carrier chip-level rate Rxcarrier quantity M/data spread spectrum factor SFxcode channel quantity Pxbits Bits per symbol, where the data spread spectrum factor SF is a ratio of a symbol rate to a chip rate.

With reference to the sixth possible implementation manner of the first aspect, in a seventh possible implementation manner, B/R=5/4, m=1, the carrier chip-level rate is 240 KHz, the carrier bandwidth is 300 KHz, the carrier quantity M is 16, the over-sampling factor K is 20, and a total bandwidth is 4.8 MHz.

With reference to the sixth possible implementation manner of the first aspect, in an eighth possible implementation manner, B/R=9/8, m=1, the carrier chip-level rate is 240 KHz, the carrier bandwidth is 270 KHz, the carrier quantity M is 16, the over-sampling factor K is 18, and a total bandwidth is 4.32 MHz.

With reference to the fourth possible implementation manner of the first aspect, in a ninth possible implementation manner, a carrier quantity M meets the following condition: M≠2^{p}, where p is an integer greater than 1, and virtual carriers of a quantity M₁ are supplemented, so that total carrier quantity M₀=M+M₁=2^{p};
a carrier bandwidth B, a carrier chip-level rate R, the over-sampling factor K, and the total carrier quantity M₀ meet: K/M₀=m×(B/R); and
a transmission rate of the multi-carrier modulated data is a data transmission rate, and the data transmission rate meets: data transmission rate=carrier chip-level rate R×carrier quantity M/data spread spectrum factor SFxcode channel quantity Pxbits Bits per symbol, where the data spread spectrum factor SF is a ratio of a symbol rate to a chip rate.

With reference to the first aspect or any one of the first to the ninth possible implementation manners of the first aspect, in a tenth possible implementation manner, a bandwidth of each carrier is B KHz, B is an arbitrary number greater than 0, and system occupied bandwidth W=bandwidth B of each carrier×carrier quantity M.

With reference to the tenth possible implementation manner of the first aspect, in an eleventh possible implementation manner, B/R=9/8, m=1, the carrier chip-level rate is 240 KHz, the carrier bandwidth is 270 KHz, the carrier quantity M is 18, the total carrier quantity M₀ is 32, the over-sampling factor K is 36, and a total bandwidth is 4.86 MHz.

With reference to a second aspect, an embodiment of the present invention provides a data transmission method, including:
receiving, through a receive port, multi-carrier modulated signals that are sent by a sending apparatus, where the carrier quantity is M, M is an integer greater than 1, a carrier spacing of the M carriers is greater than or equal to a data rate, and the carrier spacing is a spacing between center frequencies of two carriers;
performing multi-carrier demodulation on the signals; and performing a despreading, descrambling, demodulation, and decoding operation on the multi-carrier demodulated signals, to obtain target data.

In a first possible implementation manner of the second aspect, the multi-carrier demodulation includes:
performing cyclic delay spreading on the multi-carrier modulated signals, performing discrete Fourier transform DFT, and then outputting transformed signals.

With reference to the first possible implementation manner of the second aspect, in a second possible implementation manner, the performing cyclic delay spreading on the multi-carrier modulated signals, performing discrete Fourier transform DFT, and then outputting transformed signals includes:
storing initial signals by using a memory, and outputting the signals in the memory after performing filtering, M-point partitioning and addition, reordering, and M-point DFT transform; and
reading N received signals to the memory, discarding N earliest signals, and outputting the signals in the memory after performing filtering, M-point partitioning and addition, reordering, and M-point DFT transform until all the received signals are read, where
a length of the memory is a length of a prototype filter, N is a downsampling factor, a value of N is the same as a value of an over-sampling factor K used in a process in which the sending apparatus performs the multi-carrier modulation, and K and N are integers greater than 0.

With reference to the second possible implementation manner of the second aspect, in a third possible implementation manner, the carrier quantity M meets the following condition: M=2^{p}, where p is an integer greater than 1; and
a carrier bandwidth B, a carrier chip-level rate R, the over-sampling factor K, and the carrier quantity M meet: K/M=mx(B/R), where m is an integer greater than 0.

With reference to the second possible implementation manner of the second aspect, in a fourth possible implementation manner, a transmission rate of the signals that undergo the multi-carrier modulation is a data transmission rate, and the data transmission rate meets the following condition:
data transmission rate=carrier chip-level rate R×carrier quantity M/data spread spectrum factor SFxcode channel quantity Pxbits Bits per symbol, where the data spread spectrum factor SF is a ratio of a symbol rate to a chip rate.

With reference to the fourth possible implementation manner of the second aspect, in a fifth possible implementation manner, B/R=5/4, m=1, the carrier chip-level rate is 240 KHz, the carrier bandwidth is 300 KHz, the carrier quantity M is 16, the over-sampling factor K is 20, and a total bandwidth is 4.8 MHz; and a value of m may not be 1.

With reference to the fourth possible implementation manner of the second aspect, in a sixth possible implementation manner, B/R=9/8, m=1, the carrier chip-level rate is 240 KHz, the carrier bandwidth is 270 KHz, the carrier quantity M is 16, the over-sampling factor K is 18, and a total bandwidth is 4.32 MHz; and a value of m may not be 1.

With reference to the second possible implementation manner of the second aspect, in a seventh possible implementation manner, the carrier quantity M meets the following condition: M≠2^{p}, where p is an integer greater than 1, and virtual carriers of a quantity M₁ are supplemented, so that total carrier quantity M₀=M+M₁=2^{p};
a carrier bandwidth B, a carrier chip-level rate R, the over-sampling factor K, and the total carrier quantity M₀ meet: K/M₀=m×(B/R); and
a transmission rate of the signals that undergo the multi-carrier modulation is a data transmission rate, and the data transmission rate meets: data transmission rate=carrier chip-level rate Rxcarrier quantity M/data spread spectrum factor SFxcode channel quantity Pxbits Bits per symbol, where the data spread spectrum factor SF is a ratio of a symbol rate to a chip rate.

With reference to the second aspect or any one of the first to the seventh possible implementation manners of the second aspect, in an eighth possible implementation manner, a bandwidth of each carrier is B KHz, B is an arbitrary number greater than 0, and system occupied bandwidth W=bandwidth B of each carrier×carrier quantity M.

With reference to the seventh possible implementation manner of the second aspect, in a ninth possible implementation manner, B/R=9/8, m=1, the carrier chip-level rate is 240 KHz, the carrier bandwidth is 270 KHz, the carrier quantity M is 18, the total carrier quantity M₀ is 32, the over-sampling factor K is 36, and a total bandwidth is 4.86 MHz.

With reference to a third aspect, an embodiment of the present invention provides a sending apparatus, including:
a coding and modulation module, configured to perform coding and modulation on data;
a mapping module, configured to map the modulated data onto at least one carrier of M carriers, where M is an integer greater than 1, a carrier spacing of the M carriers is greater than or equal to a data rate, and the carrier spacing is a spacing between center frequencies of two carriers;
a spectrum spreading and pre-processing module, configured to perform spectrum spreading, scrambling, and precoding processing on subdata mapped onto each carrier;
a multi-carrier modulation module, configured to map the spreaded, scrambled, and precoding processed data to a transmit port, and perform multi-carrier modulation; and
a sending module, configured to send the multi-carrier modulated data to a receiving apparatus.

In a first possible implementation manner of the third aspect, the mapping module is specifically configured to:
segment a system bandwidth into M contiguous carrier bandwidths; and
allocate the data to the at least one carrier of the M carriers.

With reference to the first possible implementation manner of the third aspect, in a second possible implementation manner, the mapping module is specifically configured to:
allocate the data to at least two contiguous carriers of the M carrier bandwidths; or
allocate the data to at least two non-contiguous carriers, where when a quantity of the non-contiguous carriers is greater than two, a spacing of the carriers is equal.

In a third possible implementation manner of the third aspect, the multi-carrier modulation module is specifically configured to:
transform signals on the M carriers into time-domain signals by means of M-point inverse discrete Fourier transform IDFT, where M is an integer greater than 2;
perform cyclic delay spreading on the IDFT transformed time-domain signals; and
perform filtering, K-point partitioning and addition, and parallel-to-serial conversion on the cyclic delay spreaded signals and output the signals.

With reference to the third possible implementation manner of the third aspect, in a fourth possible implementation manner, the cyclic delay spreaded signals are aᵢ (n-u)=x_{mod}(_{nK+i, M)} (n-u), where i is an integer greater than 0, and represents a mark number of the cyclic delay spreaded signals on the M carriers, x_{mod(nK+i, M}) is a signal on the mod(nK+i, M)^{th} carrier, mod(nK+i, M) represents nK+i modulo M, K is an over-sampling factor, n represents a latest time point of a signal processed in this cyclic delay spreading, n is an integer greater than 0, u is an integer, 0≤u≤L_{f}/K-1, L_{f}/K groups of signals are processed in each cyclic delay spreading, and each group of signals includes M pieces of data.

With reference to the fourth possible implementation manner of the third aspect, in a fifth possible implementation manner, a carrier quantity M meets the following condition: M=2^{p}, where p is an integer greater than 1; and
a carrier bandwidth B, a carrier chip-level rate R, the over-sampling factor K, and the carrier quantity M meet: K/M=mx(B/R), where m is an integer greater than 0.

With reference to the fourth possible implementation manner of the third aspect, in a sixth possible implementation manner, a transmission rate of the multi-carrier modulated data is a data transmission rate, and the data transmission rate meets the following condition: data transmission rate=carrier chip-level rate Rxcarrier quantity M/data spread spectrum factor SFxcode channel quantity Pxbits Bits per symbol, where the data spread spectrum factor SF is a ratio of a symbol rate to a chip rate.

With reference to the sixth possible implementation manner of the third aspect, in a seventh possible implementation manner, B/R=5/4, m=1, the carrier chip-level rate is 240 KHz, the carrier bandwidth is 300 KHz, the carrier quantity M is 16, the over-sampling factor K is 20, and a total bandwidth is 4.8 MHz.

With reference to the sixth possible implementation manner of the third aspect, in an eighth possible implementation manner, B/R=9/8, m=1, the carrier chip-level rate is 240 KHz, the carrier bandwidth is 270 KHz, the carrier quantity M is 16, the over-sampling factor K is 18, and a total bandwidth is 4.32 MHz.

With reference to the fourth possible implementation manner of the third aspect, in a ninth possible implementation manner, a carrier quantity M meets the following condition: M≠2^{p}, where p is an integer greater than 1, and virtual carriers of a quantity M₁ are introduced, so that total carrier quantity M₀=M+M₁=2^{p};
a carrier bandwidth B, a carrier chip-level rate R, the over-sampling factor K, and the total carrier quantity M₀ meet: K/M₀=m×(B/R); and
a transmission rate of the multi-carrier modulated data is a data transmission rate, and the data transmission rate meets: data transmission rate=carrier chip-level rate R×carrier quantity M/data spread spectrum factor SFxcode channel quantity Pxbits Bits per symbol, where the data spread spectrum factor SF is a ratio of a symbol rate to a chip rate.

With reference to the third aspect or any one of the first to the ninth possible implementation manners of the third aspect, in a tenth possible implementation manner, a bandwidth of each carrier is B KHz, B is an arbitrary number greater than 0, and system occupied bandwidth W=bandwidth B of each carrier×carrier quantity M.

With reference to the tenth possible implementation manner of the third aspect, in an eleventh possible implementation manner, B/R=9/8, m=1, the carrier chip-level rate is 240 KHz, the carrier bandwidth is 270 KHz, the carrier quantity M is 18, the total carrier quantity M₀ is 32, the over-sampling factor K is 36, and a total bandwidth is 4.86 MHz.

With reference to a fourth aspect, an embodiment of the present invention provides a receiving apparatus, including:
a receiving module, configured to receive, through a receive port, multi-carrier modulated signals that are sent by a sending apparatus, where the carrier quantity is M, M is an integer greater than 1, a carrier spacing of the M carriers is greater than or equal to a data rate, and the carrier spacing is a spacing between center frequencies of two carriers;
a multi-carrier demodulation module, configured to perform multi-carrier demodulation on the signals; and
a decoding module, configured to perform a despreading, descrambling, demodulation, and decoding operation on the multi-carrier demodulated signals, to obtain target data.

In a first possible implementation manner of the fourth aspect, the multi-carrier demodulation module is specifically configured to:
perform cyclic delay spreading on the multi-carrier modulated signals, perform discrete Fourier transform DFT, and then output transformed signals.

With reference to the first possible implementation manner of the fourth aspect, in a second possible implementation manner, the multi-carrier demodulation module includes a memory, and the multi-carrier demodulation module is specifically configured to:
store initial signals by using the memory, and output the signals in the memory after performing filtering, M-point partitioning and addition, reordering, and M-point DFT transform; and
read N received signals to the memory, discard N earliest signals, and output the signals after performing filtering, M-point partitioning and addition, reordering, and M-point DFT transform until data at all time points is read, where
a length of the memory is a length of a prototype filter, N is a downsampling factor, a value of N is the same as a value of an over-sampling factor K used in a process in which the sending apparatus performs the multi-carrier modulation, and K and N are integers greater than 0.

With reference to the second possible implementation manner of the fourth aspect, in a third possible implementation manner, the carrier quantity M meets the following condition: M=2^{p}, where p is an integer greater than 1; and
a carrier bandwidth B, a carrier chip-level rate R, the over-sampling factor K, and the carrier quantity M meet: K/M=mx(B/R), where m is an integer greater than 0, and the carrier chip-level rate R is a chip-level rate of data transmission on each carrier.

With reference to the second possible implementation manner of the fourth aspect, in a fourth possible implementation manner, a transmission rate of the signals that undergo the multi-carrier modulation is a data transmission rate, and the data transmission rate meets the following condition: data transmission rate=carrier chip-level rate Rxcarrier quantity M/data spread spectrum factor SFxcode channel quantity Pxbits Bits per symbol, where the data spread spectrum factor SF is a ratio of a symbol rate to a chip rate.

With reference to the fourth possible implementation manner of the fourth aspect, in a fifth possible implementation manner, B/R=5/4, m=1, the carrier chip-level rate is 240 KHz, the carrier bandwidth is 300 KHz, the carrier quantity M is 16, the over-sampling factor K is 20, and a total bandwidth is 4.8 MHz; and a value of m may not be 1.

With reference to the fourth possible implementation manner of the fourth aspect, in a sixth possible implementation manner, B/R=9/8, m=1, the carrier chip-level rate is 240 KHz, the carrier bandwidth is 270 KHz, the carrier quantity M is 16, the over-sampling factor K is 18, and a total bandwidth is 4.32 MHz; and a value of m may not be 1.

With reference to the second possible implementation manner of the fourth aspect, in a seventh possible implementation manner, the carrier quantity M meets the following condition: M≠2^{p}, where p is an integer greater than 1, and virtual carriers of a quantity M₁ are introduced, so that total carrier quantity M₀=M+M₁=2^{p};
a carrier bandwidth B, a carrier chip-level rate R, the over-sampling factor K, and the total carrier quantity M₀ meet: K/M₀=m×(B/R); and
a transmission rate of the signals that undergo the multi-carrier modulation is a data transmission rate, and the data transmission rate meets: data transmission rate=carrier chip-level rate Rxcarrier quantity M/data spread spectrum factor SFxcode channel quantity Pxbits Bits per symbol, where the data spread spectrum factor SF is a ratio of a symbol rate to a chip rate.

With reference to the fourth aspect or any one of the first to the seventh possible implementation manners of the fourth aspect, in an eighth possible implementation manner, a bandwidth of each carrier is B KHz, B is an arbitrary number greater than 0, and system occupied bandwidth W=bandwidth B of each carrier×carrier quantity M.

With reference to the seventh possible implementation manner of the fourth aspect, in a ninth possible implementation manner, B/R=9/8, m=1, the carrier chip-level rate is 240 KHz, the carrier bandwidth is 270 KHz, the carrier quantity M is 18, the total carrier quantity M₀ is 32, the over-sampling factor K is 36, and a total bandwidth is 4.86 MHz.

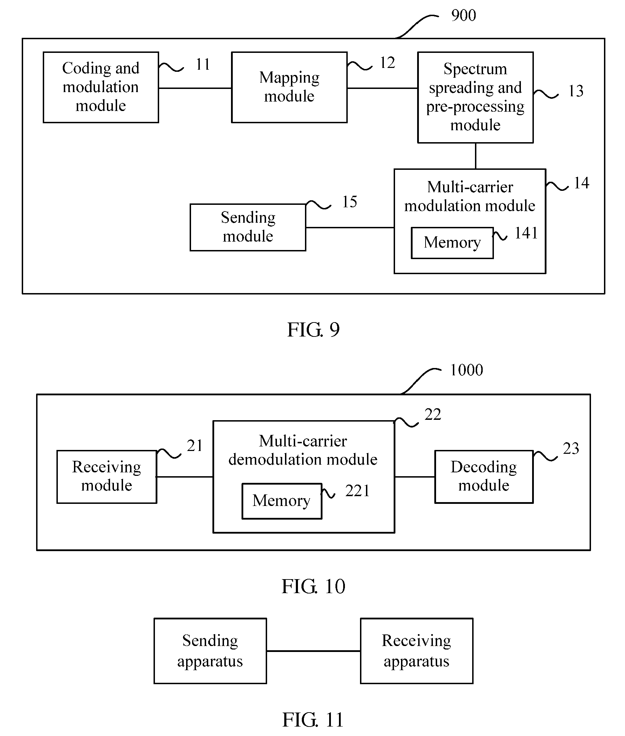

With reference to a fifth aspect, an embodiment of the present invention provides a communications system, including: the sending apparatus of an embodiment shown in FIG. 9 and the receiving apparatus of an embodiment shown in FIG. 10.

With reference to a sixth aspect, an embodiment of the present invention provides a data processing method, including: performing coding and modulation on data; mapping the modulated data onto at least one carrier of M carriers, where M is an integer greater than 1, a carrier spacing of the M carriers is greater than or equal to a data rate, and the carrier spacing is a spacing between center frequencies of two carriers; and performing spectrum spreading, scrambling, and precoding processing on data mapped onto each carrier.

In a first possible implementation manner of the sixth aspect, the mapping the modulated data onto at least one carrier of M carriers includes: segmenting a system bandwidth into M contiguous carrier bandwidths; and allocating the data to the at least one carrier of the M carriers.

With reference to the first possible implementation manner of the sixth aspect, in a second possible implementation manner, the allocating the data to the at least one carrier of the M carriers includes: allocating the data to at least two contiguous carriers of the M carrier bandwidths; or allocating the data to at least two non-contiguous carriers, where when a quantity of the non-contiguous carriers is greater than two, a spacing of the carriers is equal.

With reference to a seventh aspect, an embodiment of the present invention provides a data multi-carrier modulation method, including: transforming signals on M carriers into time-domain signals by means of M-point inverse discrete Fourier transform IDFT, where M is an integer greater than 2; performing cyclic delay spreading on the IDFT transformed time-domain signals; and performing filtering, K-point partitioning and addition, and parallel-to-serial conversion on the cyclic delay spreaded signals and outputting the signals, where K is an over-sampling factor in a process of the cyclic delay spreading.

In a first possible implementation manner of the seventh aspect, the cyclic delay spreaded signals are aᵢ (n-u)=x_{mod(nK+i, M)} (n-u), where i is an integer greater than 0, and represents a mark number of the cyclic delay spreaded signals on the M carriers, x_{mod(nK+i, M)} is a signal on the mod(nK+i, M)^{th} carrier, mod(nK+i, M) represents nK+i modulo M, K is an over-sampling factor, n represents a latest time point of a signal processed in this cyclic delay spreading, n is an integer greater than 0, u is an integer, 0≤u≤L_{f}/K-1, L_{f}/K groups of signals are processed in each cyclic delay spreading, and each group of signals includes M pieces of data.

With reference to the first possible implementation manner of the seventh aspect, in a second possible implementation manner, a carrier quantity M meets the following condition: M=2^{p}, where p is an integer greater than 1; and a ratio of a carrier bandwidth B to a carrier chip-level rate R, the over-sampling factor K, and the carrier quantity M meet: K/M=mx(B/R), where m is an integer greater than 0.

With reference to the second possible implementation manner of the seventh aspect, in a third possible implementation manner, B/R=5/4, m=1, the carrier chip-level rate is 240 KHz, the carrier bandwidth is 300 KHz, the carrier quantity M is 16, the over-sampling factor K is 20, and a total bandwidth is 4.8 MHz.

With reference to the second possible implementation manner of the seventh aspect, in a fourth possible implementation manner, B/R=9/8, m=1, the carrier chip-level rate is 240 KHz, the carrier bandwidth is 270 KHz, the carrier quantity M is 16, the over-sampling factor K is 18, and a total bandwidth is 4.32 MHz.

With reference to the first possible implementation manner of the seventh aspect, in a fifth possible implementation manner, a carrier quantity M meets the following condition: M≠2^{p}, where p is an integer greater than 1, and virtual carriers of a quantity M₁ are introduced, so that total carrier quantity M₀=M+M₁=2^{p}; and a carrier bandwidth B, a carrier chip-level rate R, the over-sampling factor K, and the total carrier quantity M₀ meet: K/M₀=m×(B/R).

With reference to the fifth possible implementation manner of the seventh aspect, in a sixth possible implementation manner, B/R=9/8, m=1, the carrier chip-level rate is 240 KHz, the carrier bandwidth is 270 KHz, the carrier quantity M is 18, the total carrier quantity M₀ is 32, the over-sampling factor K is 36, and a total bandwidth is 4.86 MHz.

With reference to an eighth aspect, an embodiment of the present invention provides a data multi-carrier demodulation method, including: storing initial signals by using a memory, and outputting the signals in the memory after performing filtering, M-point partitioning and addition, reordering, and M-point DFT transform; and reading N received signals to the memory, discarding N earliest signals, and outputting the signals in the memory after performing filtering, M-point partitioning and addition, reordering, and M-point DFT transform until all the received signals are read, where a length of the memory is a length of a prototype filter, N is a downsampling factor, a value of N is the same as a value of an over-sampling factor K used in a process in which a sending apparatus performs multi-carrier modulation, and K and N are integers greater than 0.

In a first possible implementation manner of the eighth aspect, a carrier quantity M meets the following condition: M=2^{p}, where p is an integer greater than 1; and a carrier bandwidth B, a carrier chip-level rate R, the over-sampling factor K, and the carrier quantity M meet: K/M=mx(B/R), where m is an integer greater than 0.

With reference to the first possible implementation manner of the eighth aspect, in a second possible implementation manner, B/R=5/4, m=1, the carrier chip-level rate is 240 KHz, the carrier bandwidth is 300 KHz, the carrier quantity M is 16, the over-sampling factor K is 20, and a total bandwidth is 4.8 MHz; and a value of m may not be 1.

With reference to the first possible implementation manner of the eighth aspect, in a third possible implementation manner, B/R=9/8, m=1, the carrier chip-level rate is 240 KHz, the carrier bandwidth is 270 KHz, the carrier quantity M is 16, the over-sampling factor K is 18, and a total bandwidth is 4.32 MHz; and a value of m may not be 1.

In a fourth possible implementation manner of the eighth aspect, a carrier quantity M meets the following condition: M≠2^{p}, where p is an integer greater than 1, and virtual carriers of a quantity M₁ are introduced, so that total carrier quantity M₀=M+M₁=2^{p}; and a carrier bandwidth B, a carrier chip-level rate R, the over-sampling factor K, and the total carrier quantity M₀ meet: K/M₀=m×(B/R).

With reference to the fourth possible implementation manner of the eighth aspect, in a fifth possible implementation manner, B/R=9/8, m=1, the carrier chip-level rate is 240 KHz, the carrier bandwidth is 270 KHz, the carrier quantity M is 18, the total carrier quantity M₀ is 32, the over-sampling factor K is 36, and a total bandwidth is 4.86 MHz.

With reference to the data transmission method, apparatus, and system provided by the embodiments of the present invention, in a data transmission process, a sending apparatus maps data that undergoes the modulation onto at least one carrier, and after performing spectrum spreading, scrambling, and precoding processing, performs multi-carrier modulation on data at a transmit port and sends modulated data. Because a carrier spacing between carriers is no less than a data rate, orthogonality between carriers in an existing OFDM technology is not required, thereby reducing impact of carrier frequency offset on system performance.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a flowchart of a first embodiment of a data transmission method according to the present invention;
FIG. 2 is a principle diagram corresponding to the embodiment of the data transmission method shown in FIG. 1;
FIG. 3 is a principle diagram of a multi-carrier modulation process;
FIG. 4 describes a process of cyclic delay spreading and K-point partitioning and addition in multi-carrier modulation by assuming that M=4, K=5, and L_{f}=20;
FIG. 5 is a schematic diagram of multi-carrier spectrum distribution;
FIG. 6 is a flowchart of a second embodiment of a data transmission method according to the present invention;
FIG. 7 is a principle diagram of a multi-carrier demodulation process;
FIG. 8 describes a delay line and an M-point partitioning and addition process in multi-carrier demodulation by assuming that M=4, K=5, and L_{f}=20;
FIG. 9 is a schematic structural diagram of a first embodiment of a sending apparatus according to the present invention;
FIG. 10 is a schematic structural diagram of a first embodiment of a receiving apparatus according to the present invention; and
FIG. 11 is a schematic structural diagram of a first embodiment of a communications system according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

In the embodiments of the present invention, a sending apparatus may also be referred to as a transmitter, and a receiving apparatus may also be referred to as a receiver. The transmitter may be a base station, and the receiver is a terminal; or the transmitter is a terminal, and the receiver is a base station. A base station or a terminal may be a transmitter or a receiver, and which role the base station or the terminal plays at a time point depends on a data transmission direction at that time point.

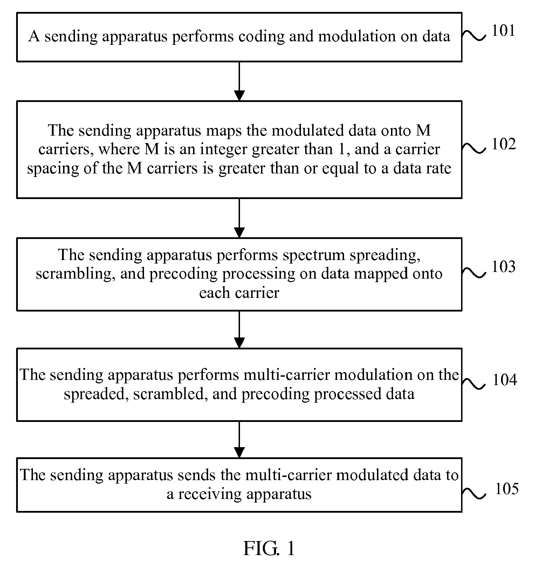

FIG. 1 is a flowchart of a first embodiment of a data transmission method according to the present invention. As shown in FIG. 1, the method of this embodiment may include:
Step 101: A sending apparatus performs coding and modulation on data.
Step 102: The sending apparatus maps the modulated data onto M carriers, where M is an integer greater than 1, and a carrier spacing of the M carriers is greater than or equal to a data rate.
Step 103: The sending apparatus performs spectrum spreading, scrambling, and precoding processing on data mapped onto each carrier.
Step 104: The sending apparatus performs multi-carrier modulation on the spreaded, scrambled, and precoding processed data.
Step 105: The sending apparatus sends the multi-carrier modulated data to a receiving apparatus.

In step 101, the sending apparatus performs coding and modulation on a transport block; in step 102, performs subcarrier mapping on a data stream; and then, in steps 103 and 104, performs spectrum spreading, scrambling, and precoding processing on a subdata stream mapped onto each carrier, and performs multi-carrier modulation. If there is a MIMO operation, that is, there are multiple transmit ports or there are multiple antennas, in step 103, precoding processing needs to be performed, that is, mapping a data signal onto the multiple transmit ports (or antennas), and finally, in step 105, the multi-carrier modulated data is sent to the receiving apparatus.

In the foregoing data transmission process, the receiving apparatus may be notified of control information corresponding to data by another means such as an extra carrier, or the control information may be directly sent to a receiver together with data information. Correspondingly, the receiver needs to feed back a channel state information indicator (Channel State Information, CSI) and hybrid automatic repeat request (Hybrid Automatic Repeat Request, HARQ)-acknowledgment (ACK) information. In an implementation manner, the control information may be carried on a primary carrier, is used to indicate which secondary carriers send data; and may further indicate information such as code channel usage, modulation, a retransmission progress of data on each carrier. The secondary carrier is a carrier with a small bandwidth, and may be used to transmit the data information and/or a part of the control information.

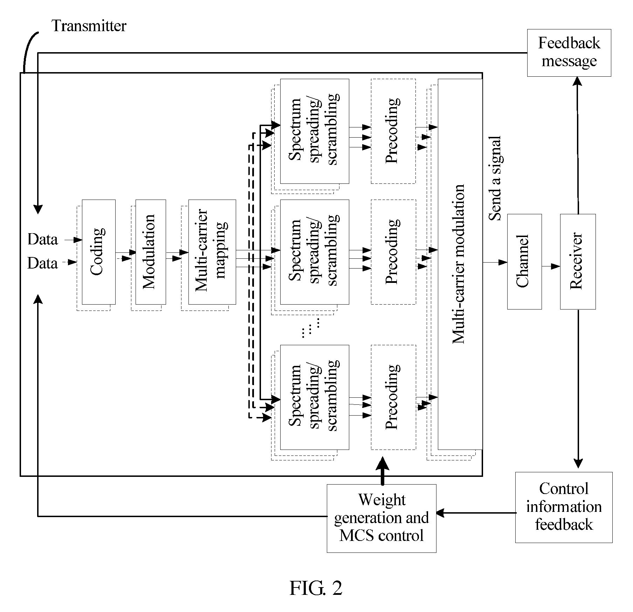

FIG. 2 is a principle diagram corresponding to the embodiment of the data transmission method shown in FIG. 1. As shown in FIG. 2, a data transmission process of this embodiment mainly includes: steps of coding, modulation, carrier mapping, spectrum spreading, scrambling, precoding, multi-carrier modulation, and transmission to the receiver through a corresponding channel. Some processes in the principle diagram are interchangeable. For example, spectrum spreading and scrambling may be performed first, and then multi-carrier mapping is performed; or multi-carrier mapping may be performed after coding, and then operations such as modulation, spectrum spreading, and scrambling may be performed on each carrier.

In specific implementation, a transmission apparatus transmits one or more data blocks each time, first performs coding and modulation according to a coding and modulation process of a downlink transport channel or a downlink physical channel, and then performs subcarrier mapping on the data blocks. The coding may be 1/3 Turbo coding, a modulation scheme may be QPSK (quadrature phase shift keying), 16QAM (16 quadrature amplitude modulation), 64QAM (64 quadrature amplitude modulation), or a modulation scheme of another order. Optionally, the transmission apparatus may transmit data of multiple different receiving apparatuses on multiple carriers at a same time, or may transmit data to different receiving apparatuses on a same carrier at different times.

Further, in step 102, the mapping the modulated data onto M carriers may be: in a carrier mapping process, first segmenting a system bandwidth into multiple contiguous carrier bandwidths, and then allocating the data to at least one carrier of the M carriers.

Further specifically, the data may be allocated to several contiguous carriers of the M carrier bandwidths, or the data may be allocated to at least two non-contiguous carriers. When a quantity of the non-contiguous carriers is greater than two, a spacing of the carriers is equal. For example, the system bandwidth is segmented into six carriers numbered 1, 2, 3, 4, 5, and 6, and the data may be allocated to three contiguous carriers 1, 2, and 3, or the data may be allocated to three carriers 1, 3, and 5 with an equal spacing.

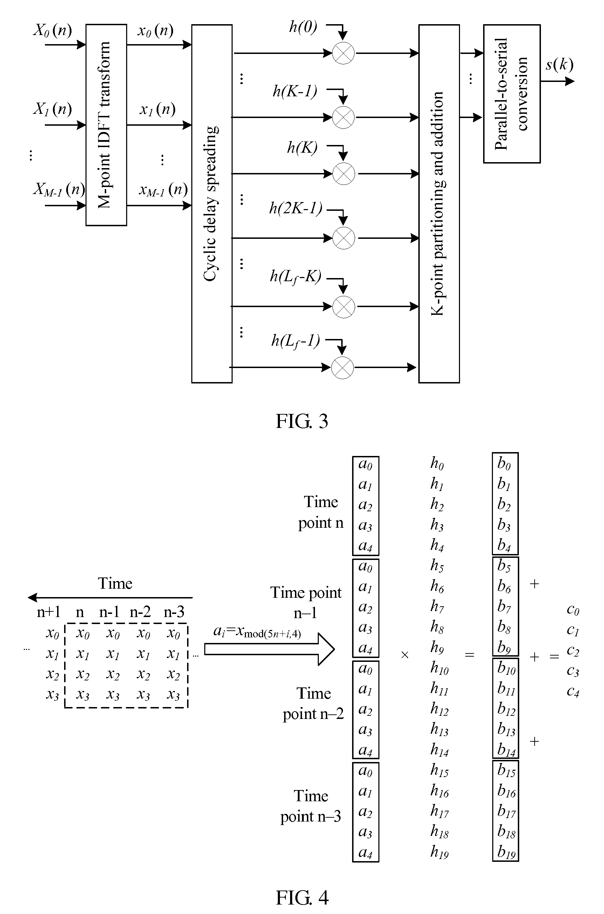

FIG. 3 is a principle diagram of a multi-carrier modulation process. As shown in FIG. 3, the multi-carrier modulation in step 104 may further include:
transforming signals {X₀ (n), X₁ (n), ..., X_{M-1} (n)} on the M carriers into time-domain signals {x₀ (n), x₁ (n), ..., x_{M-1} (n)} by means of M-point inverse discrete Fourier transform (Inverse Discrete Fourier Transform, IDFT for short), where M is an integer greater than 2; performing a cyclic delay spreading operation on data that undergoes the IDFT transform, where cyclic delay spreaded signals are {a₀ (n), ..., a_{K-1} (n), a₀ (n-1), ..., a_{K-1} (n-1), ..., a₀ (n-L_{f}/K+1), ..., a_{K-1} (n-L_{f}/K+1)}, where aᵢ (n-u)=x_{mod(nK+i, M)} (n-u), n represents a latest time point of data of this cyclic delay spreading operation, u is an integer, 0≤u≤L_{f}/K-1, L_{f} is a filter length, mod(nK+i, M) represents nK+i modulo M, K is an over-sampling factor (or referred to as upsampling, with a sampling rate greater than that of an original signal, and is an interpolation essentially, and K refers to frequency of this sampling); and finally, performing filtering, K-point partitioning and addition, and parallel-to-serial conversion on the cyclic delay spreaded signals and outputting the signals.

The cyclic delay spreading operation in the foregoing multi-carrier modulation process may specifically include:
Step 1: Store initial data in a continuous period of time by using a memory, where a time length is L_{f}/K, a data length of each time point is M, an initial state value of the memory is 0, and a position pointer p is set with an initial value of 0.
Step 2: Sequentially move M pieces of data (the M pieces of data correspond to an amount of data at a time point) by using the memory, discard data at an earliest time, and then read new data {x₀ (n), x₁ (n), ..., x_{M-1} (n)} at a time point to the memory; and then read L_{f} pieces of data from the memory and output the L_{f} pieces of data, where time order in which data in the memory is output is a time point n, a time point n-1, a time point n-2, ..., and a time point n-L_{f}/K+1, data is read for K times at each time point, the position pointer p is used as an initial position of order in which the data is output, K-times data reading and outputting is performed cyclically, and data {xₚ (n-u), _{...}, x_{M-1} (n-u), x₀ (n-u), ..., x_{mod(p+K-1)} (n-u)} is read at the (n-u)^{th} time point.
Step 3: Update the position pointer p:=mod(p+K-M, M), and then go back to step 2.

In a process of performing filtering, K-point partitioning and addition, and parallel-to-serial conversion on the cyclic delay spreaded signals and finally outputting the signals, the K-point partitioning and addition may include:
grouping filtered data, where every K pieces of data are grouped into one group, and adding up data at a same position of the L_{f}/K groups, to obtain a group of data with a length of K.

The IDFT is an inverse operation of discrete Fourier transform (Discrete Fourier Transform, DFT for short), and the IDFT and the DFT are a transform relationship between a "signal" that uses time as an independent variable and a "spectrum" function that uses frequency as an independent variable.

In specific implementation, an arrangement rule of filters meets complete prototype filter coefficients, that is, meets L_{f}=a×1cm(M, K), where L_{f} is the filter length, a is a natural number, lcm(M, K) represents a least common multiple of M and K. Such arrangement enables a filter group to be stable rather than time variant.

FIG. 4 describes a process of cyclic delay spreading and K-point partitioning and addition in multi-carrier modulation by assuming that M=4, K=5, and L_{f}=20. As shown in FIG. 4, signals input at a time point are {x0(n), x1(n), x2(n), x3(n)}, a time length of a memory is 4, a sequence a is obtained by performing cyclic delay spreading on signals in the memory, and a length L_{f} is 20. For example, when n=4, a sequence a obtained in this cyclic delay spreading is {x0(4), x1(4), x2(4), x3(4), x0(4), x0(3), x1(3), x2(3), x3(3), x0(3), x0(2), x1(2), x2(2), x3(2), x0(2), x0(1), x1(1), x2(1), x3(1), x0(1)}; and when n=5, data at an earliest time point, that is, a time point 1, is discarded by using the memory, and data {x0(5), x1(5), x2(5), x3(5)} at a time point n=5 is read to the memory, a sequence a obtained in this cyclic delay spreading is {x1(5), x2(5), x3(5), x0(5), x1(5), x1(4), x2(4), x3(4), x0(4), x1(4), x1(3), x2(3), x3(3), x0(3), x1(3), x1(2), x2(2) x3(2), x0(2), x1(2)}; then the sequence a is multiplied by a corresponding position of filter coefficients h, to obtain a sequence b, where the sequence b is filtered signals; and finally partitioning and addition is performed on the sequence b, that is, the sequence b is divided into four groups, where each group includes five pieces of data; and data at a corresponding position of the four groups are added up, to obtain an output sequence, that is, a sequence c (c₀=b₀+b₅+b₁₀+b₁₅, ...).

Correspondingly, in a data receiving process, the receiving apparatus needs to perform an operation, for the signals, inverse to that of the foregoing transmission process, including: The receiving apparatus performs multi-carrier demodulation on a data stream, and then performs a despreading/descrambling, demodulation, and decoding operation on the data stream. A specific process is described in the following embodiment corresponding to data reception.

According to this embodiment, in a data transmission process, a sending apparatus maps the modulated data onto multiple carriers, and after performing spectrum spreading, scrambling, and precoding processing, performs multi-carrier modulation on data at a transmit port and sends modulated data. Because a carrier spacing between carriers is no less than a data rate, orthogonality between carriers in an existing OFDM technology is not required, thereby reducing impact of carrier frequency offset on system performance. The OFDM technology in the prior art is very sensitive to phase and carrier frequency offset, and is very strict with orthogonality between carriers. Therefore, this embodiment of the present invention provides a new data transmission method, which resolves a problem of frequency offset sensitivity in OFDM at the same time, so as to facilitate smooth evolution from the third-generation communications network to the fourth-generation communications network.

In addition, in this embodiment, a WCDMA technology can be reused, and data transmission is performed by using a narrowband. Specifically, multi-carrier modulation is performed before data transmission, a bandwidth with a relatively small granularity may be selected for each carrier, and more different total bandwidths may be obtained through combination by means of carrier quantity selection, so that a carrier resource can be used more flexibly and data transmission efficiency can be improved rather than limiting a bandwidth of each carrier to 5 MHz in an existing WCDMA technology, in which a total bandwidth can only be 5 MHZ or a multiple of 5 MHz.

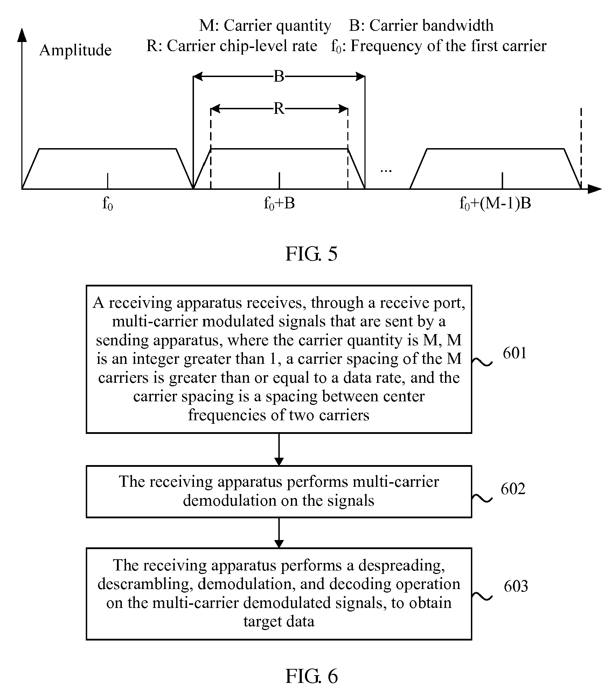

Further, in the foregoing embodiment, mainly involved parameters include a carrier chip-level rate R, a carrier bandwidth (carrier spacing) B, and a subcarrier quantity M. FIG. 5 is a schematic diagram of multi-carrier spectrum distribution, where the foregoing parameters are in the following relationships:
(1) System total bandwidth=subcarrier quantity Mxcarrier bandwidth B
(2) An over-sampling factor K, the carrier bandwidth B, the carrier quantity M, and the carrier chip-level rate R meet: K/M=mx(B/R), where m is a positive integer.
(3) Data transmission rate=carrier chip-level rate R×carrier quantity M/data spread spectrum factor SFxcode channel quantity Pxbits Bits per symbol, where the data spread spectrum factor SF is a ratio of a symbol rate to a chip rate.

In an embodiment, if the total bandwidth needs to be limited within 5 MHz, the carrier quantity meets M=2^{p}, and B/R=5/4, the parameters are configured according to Table 1:

**Table 1**

| **Carrier chip-level rate R** | **Carrier bandwidth B** | **Carrier quantity M** | **Over-sam pling factor K** | **Total bandwidth (actually occupied bandwidth)** |
|---|---|---|---|---|
| 240 K | 300 K | 16 | 20 | 4.8 M |

Certainly, parameter setting in Table 1 is only one of feasible configurations, and this embodiment of the present invention is not limited thereto provided that the parameters meet the foregoing relationships.

The parameters in the foregoing Table 1 represent that, on a 5 M bandwidth, coding and modulation is performed on a transport block, then subcarrier mapping is performed on the data stream onto 16 subcarriers, a bandwidth occupied by each subcarrier is 300 K, a chip-level rate is 240 Kbps, if there is a MIMO operation, precoding is performed on a data stream on each carrier, and finally multi-carrier modulation is performed on the 16 carriers. That is, the 16 carriers are multiplied by filter coefficients after a process of over-sampling (the over-sampling factor K is 20), 16-point IDFT transform, and cyclic delay spreading; and finally K-point partitioning and addition and parallel-to-serial conversion are performed, and processed data is output.

In another embodiment, a ratio of the carrier bandwidth B to the carrier chip-level rate R may be unequal to 5/4. For example, if B/R=9/8, one possible configuration may be shown in Table 2:

**Table 2**

| **Carrier chip**-**level rate R** | **Carrier bandwidth B** | **Carrier quantity M** | **Over**-**sampling factor K** | **Total bandwidth (actually occupied bandwidth)** |
|---|---|---|---|---|
| 240 K | 270 K | 16 | 18 | 4.32 M |

It should be noted that, in the foregoing two embodiments, a value of m is 1. However, in actual implementation, the value of m may not be 1, that is, K/M may be a multiple of B/R.

Further, in another embodiment, the carrier quantity M may not meet M=2^{p}, that is, the carrier quantity is not an integral power of 2. In this case, virtual carriers of a quantity M₁ may be supplemented, so that a total carrier quantity M₀ is an integral power of 2, that is, M₀=M+M₁=2^{p}. For example, an actual carrier quantity M is 18, and 14 virtual carriers may be supplemented, so that the total carrier quantity M₀ is 32. In this case, the parameters are in the following relationships:
(1) System total bandwidth=carrier quantity M×carrier bandwidth B
(2) The over-sampling factor K, the carrier bandwidth B, the total carrier quantity M₀, and the carrier chip-level rate R meet: K/M₀=m×(B/R), where m is an integer greater than 0.
(3) Data transmission rate=carrier chip-level rate R×carrier quantity M/data spread spectrum factor SFxcode channel quantity Pxbits Bits per symbol, where the data spread spectrum factor SF is a ratio of a symbol rate to a chip rate.

It can be seen that, the relationship (1) and the relationship (3) are the same as those in the case in which the carrier quantity M equals 2^{p}, that is, the system total bandwidth is a product of the actual carrier quantity and the carrier bandwidth.

In this case, a parameter configuration may be shown in Table 3:

**Table 3**

| **Carrier chip-level rate R** | **Carrier bandwidth B** | **Actual carrier quantity M** | **Total carrier quantity M₀** | **Over**-**sampling factor K** | **Total bandwidth (actually occupied bandwidth)** |
|---|---|---|---|---|---|
| 240 K | 270 K | 18 | 32 | 36 | 4.86 M |
| 192 K | 240 K | 20 | 32 | 40 | 4.8 M |

In another embodiment, the total bandwidth may not be limited within 5 M, and the carrier quantity may meet M=2^{p}, or not meet M=2^{p}; the ratio of the sampling factor K to the subcarrier quantity M may be 5/4, or may be another value. For example, the total bandwidth is 6 M, and a parameter configuration may be shown in Table 4:

**Table 4**

| **Carrier chip-level rate R** | **Carrier bandwidth B** | **Carrier quantity M** | **Over-samp ling factor K** | **Total bandwidth (6 M)** |
|---|---|---|---|---|
| 300 K | 375 K | 16 | 20 | 6M |
| 288 K | 324 K | 16 | 18 | 5.19 M |
| 288 K | 324 K | 18 | 36 | 5.84 M |
| 240 K | 300 K | 20 | 40 | 6 M |
| 240 K | 270 K | 22 | 36 | 5.94 M |

Similarly, the foregoing parameter values are not limited to the specific values in the table as long as the parameter values meet the relationships.

FIG. 6 is a flowchart of a second embodiment of a data transmission method according to the present invention. As shown in FIG. 6, the method of this embodiment may include:
Step 601: A receiving apparatus receives, through a receive port, multi-carrier modulated signals that are sent by a sending apparatus, where the carrier quantity is M, M is an integer greater than 1, a carrier spacing of the M carriers is greater than or equal to a data rate, and the carrier spacing is a spacing between center frequencies of two carriers.
Step 602: The receiving apparatus performs multi-carrier demodulation on the signals.

Specifically, step 602 may be: The receiving apparatus performs cyclic delay spreading on the multi-carrier modulated signals, performs discrete Fourier transform DFT, and then outputs transformed signals.
Step 603: The receiving apparatus performs a despreading, descrambling, demodulation, and decoding operation on the multi-carrier demodulated signals, to obtain target data.

A receiver needs to perform an operation, for the signals, inverse to that of a transmitter. Corresponding to a processing process of the transmitter, the receiver performs the multi-carrier demodulation on a data stream, and then performs the despreading, descrambling, demodulation, and decoding operation on the data stream.

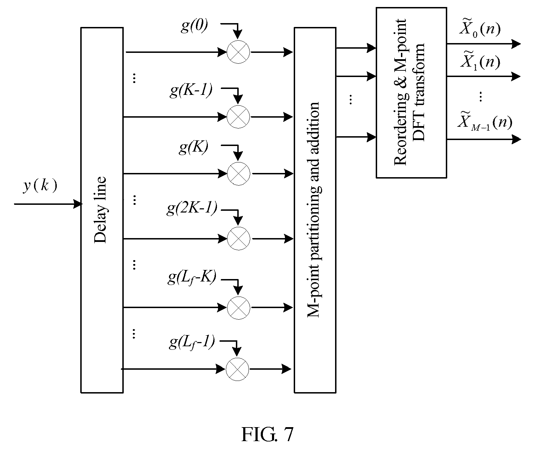

FIG. 7 is a principle diagram of a multi-carrier demodulation process. As shown in FIG. 7, the multi-carrier demodulation process may further specifically include:
storing initial signals in a continuous period of time by using a memory, where a memory length is a length L_{f} of a prototype filter, filtering the signals in the memory, then performing M-point partitioning and addition, and finally performing reordering and M-point DFT transform on the M-point partitioned and added data and outputting the data, where after the filtering, N pieces of data are sequentially moved by using the memory, data at an earliest time is discarded, new data is read to the memory, and the foregoing process is performed again, and so on, where N is a downsampling factor, and N is an integer greater than 0.

The M-point partitioning and addition may specifically include:
grouping filtered data, where each group includes M pieces of data, and adding up data at a same position of L_{f}/M groups, to obtain a group of data with a length of M.

The reordering may specifically include:
performing position adjustment on each group of data that is output after the M-point partitioning and addition, where data before the adjustment, that is, the M-point partitioned and added data is a type of sorting of {w₀ (u), w₁ (u), ..., w_{M-1} (u)}, u is a sampling time point, wᵢ (u) represents the i^{th} data at a time point u, specific outputting order is related to order in which delay line data is read, and an adjusted sequence *wₚ*(*u*) is obtained according to *wₚ*(*u*)=*w*_{mod(*p*-}*ᵤ,*_{*M*)}(*u*), where p=0, 1, ..., _{M-1}.

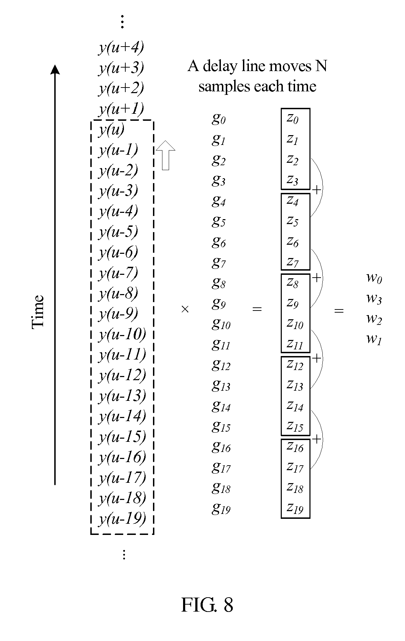

FIG. 8 describes a delay line, filtering, and an M-point partitioning and addition process in multi-carrier demodulation by assuming that M=4, K=5, and L_{f}=20. As shown in FIG. 8, a sequence y is signals that are sent from a transmitter through a channel and are received by a receiver; and a sequence g is coefficients of a prototype filter; a memory length is L_{f}=20, signals in a memory are multiplied by a position corresponding to filter coefficients with a length of L_{f}, a sequence z is obtained after filtering; M-point partitioning and addition is performed on the sequence z, that is, the sequence z is divided into five groups, where each group includes four pieces of data, and data at a corresponding position of the five groups of sub-sequence are added up, to obtain a signal sequence w; data is read in a direction of an arrow in FIG. 8, and order of data of the sequence w is {w₀, w₃, w₂, w₁}; and finally reordering and M-point DFT transform are performed on the sequence.

According to this embodiment, in a data receiving process, after receiving signals that undergo multi-carrier modulation, a receiving apparatus performs multi-carrier demodulation, and then performs a despreading, descrambling, demodulation, and decoding operation on the multi-carrier demodulated signals, to obtain target data. Because a carrier spacing between carriers is no less than a data rate, orthogonality between carriers in an existing OFDM technology is not required, thereby reducing impact of carrier frequency offset on system performance.

In another aspect, a bandwidth with a relatively small granularity may be selected for each carrier, and more different total bandwidths may be obtained through combination by means of carrier quantity selection rather than limiting a bandwidth of each carrier to 5 MHz in an existing WCDMA technology, in which a total bandwidth can only be 5 MHZ or a multiple of 5 MHz, so that a carrier resource can be used more flexibly and data transmission efficiency can be improved.

Further, in the foregoing embodiment, mainly involved parameters include a carrier chip-level rate R, a carrier bandwidth (carrier spacing) B, and a subcarrier quantity M. FIG. 4 is a schematic diagram of multi-carrier spectrum distribution, where when M=2^{p}, where p is an integer greater than 0, that is, the carrier quantity is an integral power of 2, the foregoing parameters are in the following relationships:
(1) System total bandwidth=subcarrier quantity Mxcarrier bandwidth B
(2) An over-sampling factor K, the carrier bandwidth B, the carrier quantity M, and the carrier chip-level rate R meet: K/M=mx(B/R), where m is an integer greater than 0.
(3) Data transmission rate=carrier chip-level rate R×carrier quantity M/data spread spectrum factor SFxcode channel quantity Pxbits Bits per symbol, where the data spread spectrum factor SF is a ratio of a symbol rate to a chip rate.

Further, in another implementation manner, the carrier quantity M may not meet M=2^{p}, that is, the carrier quantity is not an integral power of 2. In this case, virtual carriers of a quantity M₁ may be supplemented, so that a total carrier quantity M₀ is an integral power of 2, that is, M₀=M+M₁=2^{p}. For example, an actual carrier quantity M is 18, and 14 virtual carriers may be supplemented, so that the total carrier quantity M₀ is 32. In this case, the parameters are in the following relationships:
(1) System total bandwidth=carrier quantity M×carrier bandwidth B
(2) The over-sampling factor K, the carrier bandwidth B, the total carrier quantity M₀, and the carrier chip-level rate R meet: K/M₀=m×(B/R), where m is an integer greater than 0.
(3) Data transmission rate=carrier chip-level rate R×carrier quantity M/data spread spectrum factor SFxcode channel quantity Pxbits Bits per symbol, where the data spread spectrum factor SF is a ratio of a symbol rate to a chip rate.

It can be seen that, the relationship (1) and the relationship (3) are the same as those in the case in which the carrier quantity M equals 2^{p}, that is, the system total bandwidth is a product of the actual carrier quantity and the carrier bandwidth.

Because the data receiving process corresponds to the data transmission process, and values of parameters in the two processes are the same, for a parameter configuration of this embodiment, reference may be made to the parameter configuration in the embodiment corresponding to the data transmission process of the present invention, for example, Table 1 to Table 4 and corresponding description, and details are not described herein again.

FIG. 9 is a schematic structural diagram of a first embodiment of a sending apparatus according to the present invention. As shown in FIG. 9, a sending apparatus 900 of this embodiment may include: a coding and modulation module 11, a mapping module 12, a spectrum spreading and pre-processing module 13, a multi-carrier modulation module 14, and a sending module 15, where
the coding and modulation module 11 is configured to perform coding and modulation on data;
the mapping module 12 is configured to map the modulated data onto M carriers, where M is an integer greater than 1, a carrier spacing of the M carriers is greater than or equal to a data rate, and the carrier spacing is a spacing between center frequencies of two carriers;
the spectrum spreading and pre-processing module 13 is configured to perform spectrum spreading, scrambling, and precoding processing on subdata mapped onto each carrier;
the multi-carrier modulation module 14 is configured to perform multi-carrier modulation on the spreaded, scrambled, and precoding processed data; and
the sending module 15 is configured to send the multi-carrier modulated data to a receiving apparatus.

Further, the mapping module 12 is specifically configured to:
segment a system bandwidth into M contiguous carrier bandwidths; and
allocate the data to at least one carrier of the M carriers.

Further, the mapping module 12 is specifically configured to:
allocate the data to at least two contiguous carriers of the M carrier bandwidths; or
allocate the data to at least two non-contiguous carriers, where when a quantity of the non-contiguous carriers is greater than two, a spacing of the carriers is equal. For example, the system bandwidth is segmented into six carriers numbered 1, 2, 3, 4, 5, and 6, and the data may be allocated to three contiguous carriers 1, 2, and 3, or the data may be allocated to three carriers 1, 3, and 5 with an equal spacing.

Further, the multi-carrier modulation module 14 is specifically configured to:
transform signals on the M carriers into time-domain signals by means of M-point inverse discrete Fourier transform IDFT, where M is an integer greater than 2;
perform cyclic delay spreading on the IDFT transformed time-domain signals; and
perform filtering, K-point partitioning and addition, and parallel-to-serial conversion on the cyclic delay spreaded signals and output the signals.

The cyclic delay spreaded signals are aᵢ (n-u)=x_{mod(nK+i, M)} (n-u), where i is an integer greater than 0, and represents a mark number of the cyclic delay spreaded signals on the M carriers, x_{mod(nK+i, M)} is a signal on the mod(nK+i, M)^{th} carrier, mod(nK+i, M) represents nK+i modulo M, K is an over-sampling factor, n represents a latest time point of a signal processed in this cyclic delay spreading, n is an integer greater than 0, u is an integer, 0≤u≤L_{f}/K-1, L_{f}/K groups of signals are processed in each cyclic delay spreading, and each group of signals includes M pieces of data.

In specific implementation, the multi-carrier modulation module 14 may include a memory 141, may first store initial data in a continuous period of time by using the memory 141, where a time length is L_{f}/K, a data length of each time point is M, an initial state value of the memory is 0, and a position pointer p is set with an initial value of 0; sequentially move M pieces of data (the M pieces of data correspond to an amount of data at a time point) by using the memory 141, discard data at an earliest time, and read new data {x₀ (n), x₁ (n), ..., x_{M-1} (n)} at a time point to the memory 141; then read L_{f} pieces of data from the memory 141 and output the L_{f} pieces of data, where time order in which data in the memory 141 is output is a time point n, a time point n-1, a time point n-2, ..., and a time point n-L_{f}/K+1, data is read for K times at each time point, an initial position of order in which data is output is the position pointer p, K-times data reading and outputting is performed cyclically, and data {xp (n-u), ..., x_{M-1} (n-u), x₀ (n-u), ..., x_{mod(p+K-1)} (n-u)} is read at the (n-u)^{th} time point; and then execute the foregoing cyclic delay process again after the position pointer p:=mod(p+K-M, M) is updated.

The sending apparatus of this embodiment may be configured to execute the technical solution of the method embodiment shown in FIG. 1, and details of an implementation principle thereof are not described herein again.

In specific implementation, the coding and modulation module 11, the mapping module 12, and the spectrum spreading and pre-processing module 13 of this embodiment may be a coder, the multi-carrier modulation module 14 may be a modulator, the sending module 15 may be a transmitter, and a formed sending apparatus can also be configured to execute the technical solution of the method embodiment shown in FIG. 1.

According to the sending apparatus of this embodiment, in a data transmission process, the sending apparatus maps the modulated data onto multiple carriers, and after performing spectrum spreading, scrambling, and precoding processing, performs multi-carrier modulation on data at a transmit port and sends modulated data. Because a carrier spacing between carriers is no less than a data rate, orthogonality between carriers in an existing OFDM technology is not required, thereby reducing impact of carrier frequency offset on system performance.

In addition, according to the sending apparatus of the foregoing embodiment, multi-carrier modulation is further performed before data transmission, a bandwidth with a relatively small granularity may be selected for each carrier, and more different total bandwidths may be obtained through combination by means of carrier quantity selection, so that a carrier resource can be used more flexibly and data transmission efficiency can be improved rather than limiting a bandwidth of each carrier to 5 MHz in an existing WCDMA technology, in which a total bandwidth can only be 5 MHZ or a multiple of 5 MHz.

Further, in the foregoing embodiment, carrier quantity M=2^{p}, where p is an integer greater than 1; and a ratio of a carrier bandwidth B of the signal to a carrier chip-level rate R, the over-sampling factor K, and the carrier quantity M meet: K/M=mx(B/R), where m is an integer greater than 0, and the carrier chip-level rate R is a chip-level rate of data transmission on each carrier.

Further, in the foregoing embodiment, data transmission rate=carrier chip-level rate R×carrier quantity M/data spread spectrum factor SFxcode channel quantity Pxbits Bits per symbol, where the data spread spectrum factor SF is a ratio of a symbol rate to a chip rate.

Further, a possible parameter configuration of the foregoing embodiment is: B/R=5/4, m=1, the carrier chip-level rate is 240 KHz, the carrier bandwidth is 300 KHz, the carrier quantity M is 16, the over-sampling factor K is 20, and a total bandwidth is 4.8 MHz.

Further, a possible parameter configuration of the foregoing embodiment is: B/R=9/8, m=1, the carrier chip-level rate is 240 KHz, the carrier bandwidth is 270 KHz, the carrier quantity M is 16, the over-sampling factor K is 18, and a total bandwidth is 4.32 MHz.

Further, a possible parameter configuration of the foregoing embodiment is:
carrier quantity M≠2^{p}, where p is an integer greater than 1, and virtual carriers of a quantity M₁ are supplemented, so that M₀=M+M₁=2^{p};
a ratio B/R of a carrier bandwidth B of the signal to a carrier chip-level rate R, the over-sampling factor K, and the total carrier quantity M₀ meet: K/M₀=m×(B/R); and
data transmission rate=carrier chip-level rate R×carrier quantity M/data spread spectrum factor SFxcode channel quantity Pxbits Bits per symbol, where the data spread spectrum factor SF is a ratio of a symbol rate to a chip rate.

Further, in the foregoing embodiment, a bandwidth of each carrier is B KHz, B is an arbitrary number greater than 0, and system occupied bandwidth W=bandwidth B of each carrier×carrier quantity M.

Further, a possible parameter configuration of the foregoing embodiment is:
B/R=9/8, m=1, the carrier chip-level rate is 240 KHz, the carrier bandwidth is 270 KHz, the carrier quantity M is 18, the total carrier quantity M₀ is 32, the over-sampling factor K is 36, and a total bandwidth is 4.86 MHz.

FIG. 10 is a schematic structural diagram of a first embodiment of a receiving apparatus according to the present invention. As shown in FIG. 10, a receiving apparatus 1000 of this embodiment may include: a receiving module 21, a multi-carrier demodulation module 22, and a decoding module 23, where
the receiving module 21 is configured to receive, through a receive port, multi-carrier modulated signals that are sent by a sending apparatus, where the carrier quantity is M, M is an integer greater than 1, a carrier spacing of the M carriers is greater than or equal to a data rate, and the carrier spacing is a spacing between center frequencies of two carriers;
the multi-carrier demodulation module 22 is configured to perform multi-carrier demodulation on the signals; and
the decoding module 23 is configured to perform a despreading, descrambling, demodulation, and decoding operation on the multi-carrier demodulated signals, to obtain target data.

Further, the multi-carrier demodulation module 22 may be specifically configured to:
perform cyclic delay spreading on the multi-carrier modulated signals, perform discrete Fourier transform DFT, and then output transformed signals.

Further specifically, the multi-carrier demodulation module 22 may include a memory 221, and the multi-carrier demodulation module 22 is specifically configured to:
store initial signals by using the memory 221, and output the signals in the memory 221 after performing filtering, M-point partitioning and addition, reordering, and M-point DFT transform; and
read N received signals to the memory 221, discard N earliest signals, and output the signals after performing filtering, M-point partitioning and addition, reordering, and M-point DFT transform; and so on, until data at all time points is read, where N is a downsampling factor, a value of N is the same as a value of an over-sampling factor K used in a process in which the sending apparatus performs the multi-carrier modulation, and K and N are integers greater than 0.

The receiving apparatus of this embodiment may be configured to execute the technical solution of the method embodiment shown in FIG. 6, and details of an implementation principle thereof are not described herein again.

In specific implementation, the receiving module 21 of this embodiment may be a receiver, the multi-carrier demodulation module 22 may be a decoder, the decoding module 23 may be a decoder, and a formed receiving apparatus can also be configured to execute the technical solution of the method embodiment shown in FIG. 6.

According to this embodiment, in a data receiving process, after receiving signals that undergo multi-carrier modulation, a receiving apparatus performs multi-carrier demodulation, and then performs a spectrum despreading, descrambling, and decoding operation on the multi-carrier demodulated signals, to obtain target data. Because a carrier spacing between carriers is no less than a data rate, orthogonality between carriers in an existing OFDM technology is not required, thereby reducing impact of carrier frequency offset on system performance.

In another aspect, a bandwidth with a relatively small granularity may be selected for each carrier, and more different total bandwidths may be obtained through combination by means of carrier quantity selection rather than limiting a bandwidth of each carrier to 5 MHz in an existing WCDMA technology, in which a total bandwidth can only be 5 MHZ or a multiple of 5 MHz, so that a carrier resource can be used more flexibly and data transmission efficiency can be improved.

Further, in the foregoing embodiment, carrier quantity M=2^{p}, where p is an integer greater than 1; and a carrier bandwidth B of the signal, a carrier chip-level rate R, the over-sampling factor K, and the carrier quantity M meet: K/M=mx(B/R), where m is an integer greater than 0, and the carrier chip-level rate R is a chip-level rate of data transmission on each carrier.

Further, in the foregoing embodiment, data transmission rate=carrier chip-level rate R×carrier quantity M/data spread spectrum factor SFxcode channel quantity Pxbits Bits per symbol, where the data spread spectrum factor SF is a ratio of a symbol rate to a chip rate.

Further, a possible parameter configuration of the foregoing embodiment is: B/R=5/4, m=1, the carrier chip-level rate is 240 KHz, the carrier bandwidth is 300 KHz, the carrier quantity M is 16, the over-sampling factor K is 20, and a total bandwidth is 4.8 MHz. A value of m may not be 1.

Further, a possible parameter configuration of the foregoing embodiment is: B/R=9/8, m=1, the carrier chip-level rate is 240 KHz, the carrier bandwidth is 270 KHz, the carrier quantity M is 16, the over-sampling factor K is 18, and a total bandwidth is 4.32 MHz. A value of m may not be 1.

Further, a possible parameter configuration of the foregoing embodiment is: carrier quantity M≠2^{p}, where p is an integer greater than 1, and virtual carriers of a quantity M₁ are supplemented, so that total carrier quantity M₀=M+M₁=2^{p};
the carrier bandwidth B of the signal, the carrier chip-level rate R, the over-sampling factor K, and the total carrier quantity M₀ meet: K/M₀=m×(B/R);
data transmission rate=carrier chip-level rate R×carrier quantity M/data spread spectrum factor SFxcode channel quantity Pxbits Bits per symbol, where the data spread spectrum factor SF is a ratio of a symbol rate to a chip rate.

Further, in the foregoing embodiment, a bandwidth of each carrier is B KHz, B is an arbitrary number greater than 0, and system occupied bandwidth W=bandwidth B of each carrier×carrier quantity M.

Further, a possible parameter configuration of the foregoing embodiment is: B/R=9/8, m=1, the carrier chip-level rate is 240 KHz, the carrier bandwidth is 270 KHz, the carrier quantity M is 18, the total carrier quantity M₀ is 32, the over-sampling factor K is 36, and a total bandwidth is 4.86 MHz.

FIG. 11 is a schematic structural diagram of a first embodiment of a communications system according to the present invention. As shown in FIG. 11, the communications system of this embodiment may include: the sending apparatus of any embodiment of the present invention and the receiving apparatus of any embodiment of the present invention.

Persons of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A data transmission method, comprising:
performing coding and modulation on data;
mapping the modulated data onto at least one carrier of M carriers, wherein M is an integer greater than 1, a carrier spacing of the M carriers is greater than or equal to a data rate, and the carrier spacing is a spacing between center frequencies of two carriers;
performing spectrum spreading, scrambling, and precoding processing on data mapped onto each carrier;
performing multi-carrier modulation on the spreaded, scrambled, and precoding processed data; and
sending the multi-carrier modulated data to a receiving apparatus.

2. The method according to claim 1, wherein the mapping the modulated data onto at least one carrier of M carriers comprises:
segmenting a system bandwidth into M contiguous carrier bandwidths; and
allocating the data to the at least one carrier of the M carriers.

3. The method according to claim 2, wherein the allocating the data to the at least one carrier of the M carriers comprises:
allocating the data to at least two contiguous carriers of the M carrier bandwidths; or
allocating the data to at least two non-contiguous carriers, wherein when a quantity of the non-contiguous carriers is greater than two, a spacing of the carriers is equal.

4. The method according to claim 1, wherein the performing multi-carrier modulation on the spreaded, scrambled, and precoding processed data comprises:
transforming signals on the M carriers into time-domain signals by means of M-point inverse discrete Fourier transform IDFT, wherein M is an integer greater than 2;
performing cyclic delay spreading on the IDFT transformed time-domain signals; and
performing filtering, K-point partitioning and addition, and parallel-to-serial conversion on the cyclic delay spreaded signals and outputting the signals, wherein K is an over-sampling factor in a process of the cyclic delay spreading.

5. The method according to claim 4, wherein:
the cyclic delay spreaded signals are aᵢ (n-u)=x_{mod(nK+i, M)} (n-u), wherein i is an integer greater than 0, and represents a mark number of the cyclic delay spreaded signals on the M carriers, x_{mod(nK+i, M)} is a signal on the mod(nK+i, M)^{th} carrier, mod(nK+i, M) represents nK+i modulo M, K is an over-sampling factor, n represents a latest time point of a signal processed in this cyclic delay spreading, n is an integer greater than 0, u is an integer, 0≤u≤L_{f}/K-1, L_{f}/K groups of signals are processed in each cyclic delay spreading, and each group of signals comprises M pieces of data.

6. The method according to claim 5, wherein:
a carrier quantity M meets the following condition: M=2^{p}, wherein p is an integer greater than 1; and
a ratio of a carrier bandwidth B to a carrier chip-level rate R, the over-sampling factor K, and the carrier quantity M meet: K/M=mx(B/R), wherein m is an integer greater than 0.

7. The method according to claim 5, wherein a transmission rate of the multi-carrier modulated data is a data transmission rate, and the data transmission rate meets the following condition:
data transmission rate=carrier chip-level rate R×carrier quantity M/data spread spectrum factor SFxcode channel quantity Pxbits Bits per symbol, wherein the data spread spectrum factor SF is a ratio of a symbol rate to a chip rate.

8. The method according to claim 5, wherein:
a carrier quantity M meets the following condition: M≠2^{p}, wherein p is an integer greater than 1, and virtual carriers of a quantity M₁ are introduced, so that total carrier quantity M₀=M+M₁=2^{p};
a carrier bandwidth B, a carrier chip-level rate R, the over-sampling factor K, and the total carrier quantity M₀ meet: K/M₀=m×(B/R); and
a transmission rate of the multi-carrier modulated data is a data transmission rate, and the data transmission rate meets: data transmission rate=carrier chip-level rate R×carrier quantity M/data spread spectrum factor SFxcode channel quantity Pxbits Bits per symbol, wherein the data spread spectrum factor SF is a ratio of a symbol rate to a chip rate.

9. A data transmission method, comprising:
receiving, through a receive port, multi-carrier modulated signals that are sent by a sending apparatus, wherein the carrier quantity is M, M is an integer greater than 1, a carrier spacing of the M carriers is greater than or equal to a data rate, and the carrier spacing is a spacing between center frequencies of two carriers;
performing multi-carrier demodulation on the signals; and
performing a despreading, descrambling, demodulation, and decoding operation on the multi-carrier demodulated signals, to obtain target data.

10. The method according to claim 9, wherein the performing multi-carrier demodulation on the signals that undergo the multi-carrier modulation comprises:
performing cyclic delay spreading on the multi-carrier modulated signals, performing discrete Fourier transform DFT, and then outputting transformed signals.

11. The method according to claim 10, wherein the performing cyclic delay spreading on the multi-carrier modulated signals, performing discrete Fourier transform DFT, and then outputting transformed signals comprises:
storing initial signals by using a memory, and outputting the signals in the memory after performing filtering, M-point partitioning and addition, reordering, and M-point DFT transform; and
reading N received signals to the memory, discarding N earliest signals, and outputting the signals in the memory after performing filtering, M-point partitioning and addition, reordering, and M-point DFT transform until all the received signals are read, wherein
a length of the memory is a length of a prototype filter, N is a downsampling factor, a value of N is the same as a value of an over-sampling factor K used in a process in which the sending apparatus performs the multi-carrier modulation, and K and N are integers greater than 0.

12. The method according to claim 11, wherein:
the carrier quantity M meets the following condition: M=2^{p}, wherein p is an integer greater than 1; and
a carrier bandwidth B, a carrier chip-level rate R, the over-sampling factor K, and the carrier quantity M meet: K/M=mx(B/R), wherein m is an integer greater than 0.

13. The method according to claim 11, wherein a transmission rate of the signals that undergo the multi-carrier modulation is a data transmission rate, and the data transmission rate meets the following condition:
data transmission rate=carrier chip-level rate R×carrier quantity M/data spread spectrum factor SFxcode channel quantity Pxbits Bits per symbol, wherein the data spread spectrum factor SF is a ratio of a symbol rate to a chip rate.

14. The method according to claim 11, wherein:
the carrier quantity M meets the following condition: M≠2^{p}, wherein p is an integer greater than 1, and virtual carriers of a quantity M₁ are introduced, so that total carrier quantity M₀=M+M₁=2^{p};
a carrier bandwidth B, a carrier chip-level rate R, the over-sampling factor K, and the total carrier quantity M₀ meet: K/M₀=m×(B/R); and
a transmission rate of the signals that undergo the multi-carrier modulation is a data transmission rate, and the data transmission rate meets: data transmission rate=carrier chip-level rate R×carrier quantity M/data spread spectrum factor SFxcode channel quantity Pxbits Bits per symbol, wherein the data spread spectrum factor SF is a ratio of a symbol rate to a chip rate.

15. A sending apparatus, comprising:
a coding and modulation module, configured to perform coding and modulation on data;
a mapping module, configured to map the modulated data onto at least one carrier of M carriers, wherein M is an integer greater than 1, a carrier spacing of the M carriers is greater than or equal to a data rate, and the carrier spacing is a spacing between center frequencies of two carriers;
a spectrum spreading and pre-processing module, configured to perform spectrum spreading, scrambling, and precoding processing on subdata mapped onto each carrier;
a multi-carrier modulation module, configured to map the spreaded, scrambled, and precoding processed data to a transmit port, and perform multi-carrier modulation; and
a sending module, configured to send the multi-carrier modulated data to a receiving apparatus.

16. The sending apparatus according to claim 15, wherein the mapping module is specifically configured to:
segment a system bandwidth into M contiguous carrier bandwidths; and
allocate the data to the at least one carrier of the M carriers.

17. The sending apparatus according to claim 16, wherein the mapping module is specifically configured to:
allocate the data to at least two contiguous carriers of the M carrier bandwidths; or
allocate the data to at least two non-contiguous carriers, wherein when a quantity of the non-contiguous carriers is greater than two, a spacing of the carriers is equal.

18. The sending apparatus according to claim 15, wherein the multi-carrier modulation module is specifically configured to:
transform signals on the M carriers into time-domain signals by means of M-point inverse discrete Fourier transform IDFT, wherein M is an integer greater than 2;
perform cyclic delay spreading on the IDFT transformed time-domain signals; and
perform filtering, K-point partitioning and addition, and parallel-to-serial conversion on the cyclic delay spreaded signals and output the signals, and parallel-to-serial conversion.

19. The sending apparatus according to claim 18, wherein the multi-carrier modulation module is specifically configured to:
the cyclic delay spreaded signals are aᵢ (n-u)=x_{mod(nK+i, M)} (n-u), wherein i is an integer greater than 0, and represents a mark number of the cyclic delay spreaded signals on the M carriers, x_{mod(nK+i, M)} is a signal on the mod(nK+i, M)^{th} carrier, mod(nK+i, M) represents nK+i modulo M, K is an over-sampling factor, n represents a latest time point of a signal processed in this cyclic delay spreading, n is an integer greater than 0, u is an integer, 0≤u≤L_{f}/K-1, L_{f}/K groups of signals are processed in each cyclic delay spreading, and each group of signals comprises M pieces of data.

20. The sending apparatus according to claim 19, wherein:
a carrier quantity M meets the following condition: M=2^{p}, wherein p is an integer greater than 1; and
a carrier bandwidth B, a carrier chip-level rate R, the over-sampling factor K, and the carrier quantity M meet: K/M=mx(B/R), wherein m is an integer greater than 0.

21. The sending apparatus according to claim 19, wherein a transmission rate of the multi-carrier modulated data is a data transmission rate, and the data transmission rate meets the following condition:
data transmission rate=carrier chip-level rate R×carrier quantity M/data spread spectrum factor SFxcode channel quantity Pxbits Bits per symbol, wherein the data spread spectrum factor SF is a ratio of a symbol rate to a chip rate.

22. The sending apparatus according to claim 19, wherein:
a carrier quantity M meets the following condition: M≠2^{p}, wherein p is an integer greater than 1, and virtual carriers of a quantity M₁ are introduced, so that total carrier quantity M₀=M+M₁=2^{p};
a carrier bandwidth B, a carrier chip-level rate R, the over-sampling factor K, and the total carrier quantity M₀ meet: K/M₀=m×(B/R); and
a transmission rate of the multi-carrier modulated data is a data transmission rate, and the data transmission rate meets: data transmission rate=carrier chip-level rate R×carrier quantity M/data spread spectrum factor SFxcode channel quantity Pxbits Bits per symbol, wherein the data spread spectrum factor SF is a ratio of a symbol rate to a chip rate.

23. A receiving apparatus, comprising:
a receiving module, configured to receive, through a receive port, multi-carrier modulated signals that are sent by a sending apparatus, wherein the carrier quantity is M, M is an integer greater than 1, a carrier spacing of the M carriers is greater than or equal to a data rate, and the carrier spacing is a spacing between center frequencies of two carriers;
a multi-carrier demodulation module, configured to perform multi-carrier demodulation on the signals; and
a decoding module, configured to perform a despreading, descrambling, demodulation, and decoding operation on the multi-carrier demodulated signals, to obtain target data.

24. The receiving apparatus according to claim 23, wherein the multi-carrier demodulation module is specifically configured to:
perform cyclic delay spreading on the multi-carrier modulated signals, perform discrete Fourier transform DFT, and then output transformed signals.

25. The receiving apparatus according to claim 24, wherein the multi-carrier demodulation module comprises a memory, and the multi-carrier demodulation module is specifically configured to:
store initial signals by using the memory, and outputting the signals in the memory after performing filtering, M-point partitioning and addition, reordering, and M-point DFT transform; and
read N received signals to the memory, discard N earliest signals, and output the signals after performing filtering, M-point partitioning and addition, reordering, and M-point DFT transform until data at all time points is read, wherein
a length of the memory is a length of a prototype filter, N is a downsampling factor, a value of N is the same as a value of an over-sampling factor K used in a process in which the sending apparatus performs the multi-carrier modulation, and K and N are integers greater than 0.

26. The receiving apparatus according to claim 25, wherein:
the carrier quantity M meets the following condition: M=2^{p}, wherein p is an integer greater than 1; and
a carrier bandwidth B, a carrier chip-level rate R, the over-sampling factor K, and the carrier quantity M meet: K/M=mx(B/R), wherein m is an integer greater than 0, and the carrier chip-level rate R is a chip-level rate of data transmission on each carrier.

27. The receiving apparatus according to claim 25, wherein a transmission rate of the signals that undergo the multi-carrier modulation is a data transmission rate, and the data transmission rate meets the following condition:
data transmission rate=carrier chip-level rate R×carrier quantity M/data spread spectrum factor SFxcode channel quantity Pxbits Bits per symbol, wherein the data spread spectrum factor SF is a ratio of a symbol rate to a chip rate.

28. The receiving apparatus according to claim 25, wherein:
the carrier quantity M meets the following condition: M≠2^{p}, wherein p is an integer greater than 1, and virtual carriers of a quantity M₁ are introduced, so that total carrier quantity M₀=M+M₁=2^{p};
a carrier bandwidth B, a carrier chip-level rate R, the over-sampling factor K, and the total carrier quantity M₀ meet: K/M₀=m×(B/R); and
a transmission rate of the signals that undergo the multi-carrier modulation is a data transmission rate, and the data transmission rate meets: data transmission rate=carrier chip-level rate R×carrier quantity M/data spread spectrum factor SFxcode channel quantity Pxbits Bits per symbol, wherein the data spread spectrum factor SF is a ratio of a symbol rate to a chip rate.

29. A communications system, comprising: the sending apparatus according to any one of claims 15 to 22 and the receiving apparatus according to any one of claims 23 to 28.
